# EUROPÄISCHE PATENTSCHRIFT

(11) **EP 0 842 328 B1**
(45) Veröffentlichungstag und Bekanntmachung des Hinweises auf die Patenterteilung: **28.11.2001**
(21) Anmeldenummer: 96927052.9
(22) Anmeldetag: 29.07.1996
(51) Int. Cl.: E01B 3/36, E01B 3/28, E01B 3/42

(54) **ZWEI-BLOCK-SCHWELLE AUS POLYMERBETON UND VERFAHREN ZU DEREN HERSTELLUNG**
TWIN-BLOCK POLYMER-CONCRETE SLEEPER AND METHOD OF PRODUCING IT
TRAVERSE MIXTE EN BETON AU POLYMERE ET SON PROCEDE DE FABRICATION

(30) Priorität: 28.07.1995 DE 19529024
(43) Veröffentlichungstag der Anmeldung: 20.05.1998
(73) Patentinhaber: BBL Bahnbau Lüneburg GmbH, 21337 Lüneburg (DE); Meyer Rohr + Schacht GmbH, 21337 Lüneburg (DE)
(72) Erfinder: MEYER, Wilhelm, D-21337 Lüneburg (DE); LUESMANN, Claus, D-21337 Lüneburg (DE); SOJAK, Kai, D-21029 Hamburg (DE); WITTE, Bernd, D-21391 Repperstedt (DE)
(74) Vertreter: Effert, Bressel und Kollegen
(86) Internationale Anmeldenummer: EP9603288
(87) Internationale Veröffentlichungsnummer: WO9705331

(56) Entgegenhaltungen:
- EP-A- 0 083 145
- EP-A- 0 249 574
- EP-A- 0 557 870
- DE-A- 2 133 115
- DE-U- 1 912 042
- GB-A- 131 711
- GB-A- 952 186
- GB-A- 1 067 608

## Beschreibung

Die Erfindung betrifft eine unbewehrte Zwei-Block-Schwelle für schienengebundenen Verkehr, bei der zwei zur Auflagerung von elektrisch isolierten Schienen vorgesehene Blöcke aus Polymerbeton bestehen, sowie ein Verfahren zur Herstellung einer derartigen Schwelle.

Mit Spannstahl bewehrte, als Querschwelle für die Auflagerung zweier Schienen dienende Stabschwellen aus Spannbeton sind weithin bekannt. Als Ersatz für Spannstahl wurde mit der EP 0 495 268 A1 und EP 0 249 574 A2 vorgeschlagen, GFK- oder andere Fasern sowie langgestreckte Kunststoffteile mit integrierten Dübeln zu verwenden. Fakultativ ist auch erwähnt, daß eine höhere Torsions- oder Bruchfestigkeit durch Verwendung von Polymerbeton mit kolloidalem Zement unter Zugabe von 4 - 10 % Polyvinylacetat zu erzielen ist. Die dargestellten Betonschwellen weisen außerdem eine elektrisch isolierte, elastische Schienenbefestigung auf. Versuche haben gezeigt, daß sich die verschiedenen Bindemittel nicht gut kombinieren lassen

Aus der DE-U 19 12 042 ist bekannt, Spannstähle durch eine Zementhülle zu ersetzen und darin Beton einzugießen. Das Gemenge für die Betonherstellung soll aus 4 Teilen Sand, 8 Teilen Kies und 1 Teil polymerisiertes Polyesterharz bestehen; anstelle von inertem anorganischem Material könnten auch Fasern oder anderes Material Verwendung finden. Die Schwelle soll ihre mechanische Festigkeit durch die Zementhülle und schichtweises Vergießen des Betons erhalten. Als Harz wird polymerisiertes Polyesterharz angegeben. Die Schienenbefestigungsteile können eingegossen werden.

In der DE-AS 21 33 115 werden Stabschwellen aus Beton offenbart, in denen Zement zur Gänze durch ausgehärtetes Kunstharz ersetzt ist. An der Schwellenunterseite ist eine grobkörnige, 20 mm dicke Verschleißschicht angegossen, die gegenüber der Schwelle gemäß DE-U 19 12 042 für einen besseren Verschiebewiderstand sorgen sollen. Die Schwelle soll aus Schotter bestehen, der mit Bindemitteln aus beliebigen, härtbaren Kunstharzen wie Polyesterharz, Epoxidharz oder anderen spezifizierten Harzen gebunden ist, wobei die Schwelle durch eine äußere verlorene Schalung, GFK-Bewehrungsstränge oder GFK-Außenschichten, stabilisiert werden soll.

In der EP 0 154 259 A1 wird eine Stabschwelle offenbart, die Beton mit Kunstharz als Bindemittel und einen Gemengezusatz an Elastomerteilen aus Gewebeteilen und Gummi enthält. Das Gemenge für die Betonschwelle soll aus 63 % Steinstaub, Bruchsand und Splitt, 27 % Gummi, 10 % Duromer bestehen. Die Lehre betrifft eine Schwelle mit verbesserter Elastizität und Dämpfung für die Schienenauflagerung. Die Dämpfung soll offensichtlich so gut sein, daß eine starre, unelastische, aber auch elektrisch nicht isolierte, fest eingegossene Schienenbefestigung verwendet werden soll.

Soweit diese Veröffentlichungen überhaupt Angaben darüber enthalten, ist der Harzanteil im Beton nicht eindeutig bestimmbar und die Lehre nicht nachvolziehbar. Soweit %-Werte angegeben werden, bleibt unklar, ob Vol% oder Gew% gemeinst sind, wodurch die Mengen bis zum Dreifachen divergieren können. Gemengeangaben können sich definitionsgemäß nur auf die Trockensubstanzen beziehen, nicht jedoch auf die Zusammensetzung des zu vergießenden Betons. Die offenbarten Herstellverfahren sind umständlich, und in der Regel scheint der Beton eine zu geringe mechanische Festigkeit zu haben, weshalb additiv äußere und/oder innere Bewehrungen empfohlen werden.

Zwei-Block-Schwellen aus Beton sind in letzter Zeit insbesondere für feste Fahrbahnen, d.h. auf Beton- oder Asphaltuntergrund verlegte Schwellen und / oder Schienen vorgeschlagen worden (EP 0 557 870 A1, DE 41 13 566 A1, DE-U-94 15 311). Die Art des Betons oder der Zuganker ist dort nicht offenbart.

In der EP 0 412 022 A 1 ist eine Zwei-Block-Schwelle offenbart, deren Blöcke aus Metallkästen bestehen, zwischen denen ein metallener Zuganker/Abstandshalter angeordnet ist, welcher elastisch und elektrisch isolierend in den Metallkästen gelagert ist. Dieser Vorschlag soll ein Brechen der Schwellen verhindern, was bei Zwei-Block-Schwellen aus Beton beobachtet worden sein soll.

Aus der EP 0 019 956 A1 ist eine Zwei-Block-Schwelle aus Spannbeton bekannt, bei der die Spannstähle durch einen rohrförmigen Abstandshalter zu den Bewehrungselementen in den beiden Betonblöcken geführt werden. In die Bewehrungen sind Kunststoffkörper integriert, die als Schienenauflager und zur elastischen, elektrisch isolierten Schienenbefestigung mittels Federn dienen. Zugleich ist eine Gießform dargestellt, mit der die Zwei-Block-Schwellen hergestellt werden können. Der Herstellungsaufwand ist enorm, die Schienenauflagerung bzw. die Halterung für die Schienen zu weich.

Von daher liegt der Erfindung das Problem zugrunde, eine gegenüber dem Stand der Technik verbesserte, betriebssichere, einfach herstellbare Zwei-Biock-Schwelle sowie ein zweckentsprechendes Herstellverfahren vorzuschlagen.

Das Problem wird erfindungsgemäß durch die Merkmale der Ansprüche 1, 2 und 11 gelöst. Weiterbildungen der Erfindung sind in den Unteransprüchen beschrieben.
Die erfindungsgemäße Lösung geht davon aus, daß der an sich bekannte Beton mit Kunstharzbindemitteln in modifizierter Form, insbesondere mit anderen Zuschlagsmengen an Kies und Harz, die Möglichkeit bietet, eine optimierte Betonschwelle als Querschwelle für Gleise zu liefern. Das im folgenden Polymerbeton genannte Material ist ein Beton, bei dem als Bindemittel ausschließlich ein Reaktionsharz verwendet wird.

Die Deutsche Bahn AG hat in einem kürzlich erschienenen Merkblatt über Schäden an Spannbetonschwellen dargestellt, daß die herkömmlichen Spannbetonstabschwellen in vielfältiger Weise rißgefährdet sind. Durch falsches Spannen der Stähle bei der Fertigung der Schwelle können Kopfrisse oder Sickenrisse entstehen. Durch unvermeidliche Schwindungsprozesse nach dem Vergießen der Spannbetonschwellen treten häufig Sickenrisse, Frischbetonrisse oder Netzrisse auf, die auch mit der langsamen Wasseraufnahme und Wasserabgabe des Betons im Zusammenhang stehen. Bei falscher Wahl von Kiesen und zementösen Bindemitteln sind häufig Verbundrisse oder Treibrisse festzustellen. Bei der Verwendung von Dübeln mit geschlossener Unterseite kann im Winter eine Eisbildung nach Eindringen von Wasser in Dübel zur Sprengung der Schwelle führen. Außerdem wurden Biegerisse und Schubrisse festgestellt, die durch Torsion bzw. starke Belastung in der Schwellenmitte auftreten können.
Für alle diese möglichen Rißursachen soll die vorliegende Erfindung Abhilfe schaffen, indem eine für sich bekannte Schwelle durch entsprechende Änderungen des Betons bzw. Zugankers und des Dübels, die in den Beton eingelassen sind, vermieden werden.

Es ist vorgesehen, daß der Polymerbeton in einer ersten erfindungsgemäßen Variante nicht bewehrt wird, wodurch keinerlei Problem bezüglich der elektrischen Isolation der verschiedenen Befestigungselemente auftreten kann und zudem ein homogeneres Vergießen des Betons der beiden Blöcke möglich ist. Zwischen den beiden Blöcken wird als Zuganker ein Stahlprofil angeordnet, dessen Enden von den Blöcken umschlossen werden, wobei die Stahlprofile nur ein kurzes Stück in die Polymer-Betonblöcke hineinragen, damit genügend Platz für einzulassende Dübel für die Schienenbefestigungsmittel gelassen wird. Die Enden des Stahlprofils, die als L-Winkelprofil, T-Profil oder sonstwie ausgebildet sein können, werden gespreizt oder gewellt oder flachgedrückt, gegebenfalls zusätzlich mit Löchern versehen, damit zwischen den Betonblöcken und den Enden des Stahlprofils beim Vergießen des Polymerbetons ein Formschluß entsteht. Bevorzugtes Stahlprofil ist ein L-Profil, dessen Ecke in Vertikalrichtung oder Horizontalrichtung mittig liegt oder ein Rundrohr, dessen beide Enden flachgedrückt, gelocht und gespalten werden, wobei der Lochdurchmesser sich nach der gröbsten verwendeten Kiesfraktion bestimmt.

Der Polymerbeton soll aus möglichst grobkörnigem Kies als Grundbestandteil bestehen, welcher eine relativ geringe Kornoberfläche aufweist. Diese geringe Kornoberfläche soll dann durch ein Reaktionsharz als alleiniges Bindemittel die anorganischen Bestandteile, unter denen sich keine zementösen Bindemittel verstehen, binden. Der Anteil des anorganischen Materials, welches sich aus Mehl, feinem Kies und groben Kiesen zusammensetzt, soll etwa 80 - 95 Gew% betragen, darunter mindestens 25 % aus Kies mit einer Körnung > 8 mm, vorzugsweise > 16 mm bis etwa 32 oder 40 mm, und die Menge an Reaktionsharz, z.B. einem ungesättigten Polyesterharz oder auch Epoxydharz, soll auf etwa 5 - 15 Gew%, vorzugsweise 8 - 12 Gew%, begrenzt werden. Bei einer solchen Zusammensetzung des Polymerbetons ist sichergestellt, daß er ausreichend fest ist, kein Wasser während der Liegedauer aufnimmt und während der Herstellung durch den abgestimmten sehr geringen Bindemittelbedarf, je nach dessen Art, keine (z.B. Epoxiharz) oder nur eine geringfügige Schwindung nach dem Vergießen aufweist. Im übrigen kann auch das Schwindmaß durch das Mengenverhältnis der Komponenten des Bindemittels auf Werte zwischen 0,5 und 3% eingestellt werden. Diese letzten beiden Eigenschaften verhindern eine Vielzahl von Rissen, wie sie bei üblichen Spannbetonschwellen vorkommen.

Die Zugabemenge an Harz wird der Fachmann von der Kies- und Sandmischung und der daraus resultierenden Kornoberfläche und Kornstruktur abhängig machen. Die angegebenen Bindemittelmengenbereiche können vom Fachmann bei wiederholter Anwendung der Erfindung nach seinen Erfahrungen näher eingegrenzt werden.
Bei fehlender Stahlbewehrung ist auch keine zusätzliche Maßnahme für die elektrische Isolierung der Schienenbefestigungselemente erforderlich.

Die zweite erfindungsgemäße Variante der Schwelle weist in jedem Block zumindest in dessen Längsrichtung, das ist die Erstreckungsrichtung quer zur Schiene, Mittel zur Übertragung von Zugkräften auf für den Fall des Bruches des Blockes, welche den Zuganker überlappen. Dabei handelt es sich nicht um eine Bewehrung nach dem Stand der Technik, die im wesentlichen eine zugfeste Ankopplung an den Zuganker und / oder eine Druckbewehrung des einzelnen Blockes nach Art eines Drahtkorbes bilden.
Die erfindungsgemäßen Mittel liegen vorzugsweise in einer nahen Parallelebene zur Aufstandsfläche der Schwelle in Gebrauchslage, nicht jedoch in der Ebene des Zugankers. Im Entgleisungsfalle könnte ein Radkranz den Betonblock zwischen dem Schienenauflager und dem Ende des Zugankers brechen oder spalten. Auch ein Verbiegen des Zugankers könnte Brechen des Blockes einleiten. Dann wäre die Spurhalter-Funktion der Schwelle nicht mehr gegeben. Diesen Bruch des Blockes sollen erfindungsgemäß die Mittel zur Übertragung von Zugkräften verhindern. Wichtig ist jedoch, daß vom Zuganker her keine Kräfte auf die zugfesten Mittel übertragen werden. In gleicher Weise soll eine Einleitung von Druckkräften aus dem bei Auflast sich bildenden Druckkegel nahe dem Schienenauflager verhindert werden. Die zugfesten Mittel liegen also in einer neutralen Stress-Zone des Blockes und dienen ausschließlich der Spurhaltung der Schienen bei Bruch des Blockes bis zum Austausch der Schwelle.
Die zugfesten Mittel sollen vorzugfsweise aus Nichtmetallen, wie für sich bekannten Glasfasern, Kohlefasern oder ähnlichem bestehen. Jedoch können auch entsprechend angeordnete Stahldrähte oder Kurzdrähte sowie Wirrfasern oder überlappend angeordnete Einzelfasern Anwendung finden.

Als weitere Vorteile sind zu nennen, daß eine Zwei-Block-Schwelle der erfindungsgemäßen Art wegen des Zugankers aus Stahl und des reduzierten spezifischen Gewichtes des Polymerbetons erheblich leichter ist als eine übliche Betonschwelle, die als Stabschwelle Verwendung findet. Polymerbeton ist um etwa 5 bis 8 % leichter als herkömmlicher Beton.

Trotz dieser leichteren Ausführung ist die Betonschwelle immer noch so schwer, sie wiegt z.B. 120 - 170 kg, daß der im Betrieb zu beobachtenden Abhebewelle aufgrund Schienendurchbiegung durch entsprechende Gewichtskräfte entgegengewirkt wird.

Durch die Ausbildung als Zwei-Block-Schwelle ist bei einer Schotterbettlagerung mit den Kopfflächen der Blöcke eine genügend große Sperrfläche für einen entsprechend hohen Querverschiebewiderstand gegeben, so daß die bisher bei stabförmigen Polymerbetonschwellen beobachtete leichte Querverschieblichkeit bei Zwei-Block-Schwellen nicht gegeben ist. Auf die besondere Anwendbarkeit von Zwei-Block-Schwellen im Zusammenhang mit fester Fahrbahn wurde bereits hingewiesen, insbesondere wenn zwischen den Betonblöcken ein Querkraftsockel eingebaut wird, wie dies bei fester Fahrbahn z.B. auf Asphaltuntergrund der Fall ist.

Erfindungsgemäß soll der Bindemittelanteil durch entsprechend grobkörniges Material vorzugsweise auf einen Anteil von 8 - 12 Gew% reduziert werden. Dies gelingt insbesondere, wenn das anorganische Material für den Polymerbeton aus folgenden Körnungen zusammengesetzt wird:

| | |
|---|---|
| bis 0,3 mm | 5 - 14 Gew% |
| 0,3 - 8 mm | 25 - 55 Gew% |
| > 8 mm | 25 - 55 Gew% |

und, bevorzugt,

| | |
|---|---|
| Mehl 0,3 mm | 8 - 12 Gew% |
| Kiesel 0,3 - 2 mm | 12 - 30 Gew% |
| 2 - 8 mm | 12 - 35 Gew% |
| 8 - 16 mm | 5 - 20 Gew% |
| > 16 mm - 32 oder 40 mm | 10 - 50 Gew% |

Durch diese Zusammensetzung des Materials ergibt sich die zuvor bereits beschriebene geringe Kornoberfläche.

In einen derartigen Polymerbetonblock können die Dübel für die Schienenbefestigungen eingegossen werden. Dazu werden bevorzugt Dübel verwendet, die oben und unten offen sind, so daß Wasser durchlaufen und im Winter nicht vereisen kann. Dadurch wird eine Sprengung durch Eisbildung vermieden. Besonders bevorzugt werden Dübel, die von der Oberseite bis zur Unterseite der Schwelle reichen und so einen Entwässerungskanal bilden. Die Dübel haben an der Außenseite eine Wellenstruktur, so daß ein Formschluß mit dem Beton möglich ist.

Ein bevorzugtes Herstellverfahren für eine derartige Zwei-Block-Schwelle geht aus von dem bekannten Herstellverfahren für Zwei-Block-Schwellen, die eine Spannbeton-Bewehrung aufweisen.
Zunächst wird eine Einzel- oder Mehrfachgießform vorbereitet, indem die einzugießenden Teile wie Dübel und Zuganker und gegebenenfalls zugfeste Mittel je Block auf entsprechende Lager in der Form eingelegt und genau fixiert werden und zugleich die die Außenkontur formenden, in die Gießform einzusetzenden Formteile entsprechend plaziert werden. Hier sind es insbesondere verschiedene Formteile, die zur unterschiedlichen Ausbildung der Schienensitze führen. Bekanntlich haben Straßenbahnschwellen eine andere Form und benötigen eine andere Befestigungsart als Schwellen analog einer Spannbetonschwelle, z.B. der Bauart B 70.

Der Polymerbeton wird chargenweise zubereitet, wobei die zuvor beschriebenen Mengen an Kies, gegebenenfalls an Mineralmehl oder Füllstoffen, und die Mengen an duroplastischem Reaktionsharz als Bindemittel kurzzeitig miteinander vermischt werden. Vor dem Mischen können das Harz und die Kiesfraktionen erwärmt werden, um eine optimale Vermischung und Vernetzung zu erreichen. Die bevorzugten Temperaturbereiche sind dabei 20 bis 35 °C innerhalb eines generellen Arbeitsbereiches von etwa 10 bis 40 °C, weil hier die besten Tropfzeiten der Harze liegen. Dadurch wird der Bindemittelbedarf bei guter Vernetzung reduziert.
Aus wirtschaftlichen Gründen ist sowenig Harz wie möglich zu benutzen. Zur Erwärmung der Materialien wird zusätzlich oder alternativ die exotherme Reaktion des Zwei-oder mehr-Komponenten- Reaktionsharzes genutzt. Durch für sich bekannte Mischungsverhältnisse von Basismasse, Härter und Beschleuniger wird das Bindemittel so eingestellt, daß innerhalb beherrschbarer Tropfzeiten ein Maximum an exothermer Energie bei der Betonherstellung frei wird zum Erwärmen der Mineralstoffe. Die Mischzeit wird dabei auf etwa 3 min beschränkt; die Reaktionszeit in der Gießform, bei der sich die Schwelle auf etwa 45 bis 50 °C erwärmt, auf etwa 5 bis 30 min, je nach Volumen der Schwelle und Art des Bindemittels.

Als Füllstoff können bei Bedarf anorganische Materialien, z.B. Asche oder ähnliche, mit Harz bindbare Stoffe, zugegeben werden. Als Reaktionsharze werden bevorzugt soche der DE-Norm DIN 18820, Teil 1 verwendet, z.B. ungesättigte Polyesterharze auf Basis Isophtalsäure und Orthophtalsäure. Verwendet werden können aber auch Vinylesterharze, Epoxidharze oder Furanharze. Dabei ist darauf zu achten, daß die Summe der Kornoberflächen nicht größer wird als für homogenen festen Polymerbeton nötig.

Nach dem Mischen, bei dem darauf zu achten ist, daß keine Entmischung der groben und feinen Mischungsbestandteile vorkommt, wird die Charge in die Gießform eingebracht. Erforderlichenfalls kann der Polymerbeton dann verdichtet werden, z.B. durch Rütteln oder Schwingen der Gießform.
Nach einer Zeit von ca. 30 min ist die Schwelle so weit ausgehärtet, daß sie aus der Schalung genommen werden kann. Die Schwelle kann an der Betonsohle mittels Vakuum-Saug-Förderer aus der Schalung entnommen werden, da Polymerbeton an der Oberfläche nicht sandet und eine sichere Saugfläche bietet.

Eine Nachhärtung ist nicht erforderlich. Die Schwelle kann nach ihrer Produktion bereits zur Verladung auf die Baustelle gebracht werden. Sofern die Umgebungstemperatur zu gering ist, sollte jedoch die noch fortschreitende Polymerisation des Bindemittels für einige Stunden durch Lagerung der Schelle oberhalb Raumtemperatur abgewartet werden. Die mechanischen Festigkeitswerte der Schwelle können bei Bedarf durch Auslagern bei einer Temperatur von 40 bis 80 °C, vorzugsweise für 5 bis 8 Stunden, erhöht werden. Nach der Transportzeit zur Baustelle sind die Schwellen voll mechanisch belastbar; bei Verwendung von Epoxiharz wird jedoch eine Lagerzeit von etwa 7 Tagen empfohlen.
Bei Spannbetonschwellen ist es üblich, daß zwischen der Herstellung und der Verwendung ca. 20 Tage liegen, wobei auch die Art der Herstellung häufig noch ein stundenlanges Aushärten der zementösen Bindemittel bedingt und in der Regel eine Nachbehandlung durch Bedampfen erforderlich ist.

Eine erfindungsgemäßt hergestellte Schwelle weist eine Druckfestigkeit auf, die etwa doppelt so hoch ist wie die üblicher Betonschwellen.
Selbst bei unüblich hohen Belastungen im Schwinghebeltest zeigt die Schwelle nach mehreren Millionen Lastspielen keinerlei belastungsbedingte Verschleißerscheinungen. Die Schwelle ist wegen ihrer außerordentlich exakten Formgebung und ihrer homogenen Oberfläche sehr geeignet, mit aus Kunststoff bestehenden elastischen Schienenbefestigungen, z.B. Elastomerklemmen zusammenzuwirken.

Zur Verbesserung der UV-Beständigkeit können dem Bindemittel für sich bekannte stabilisierende Mittel beigegeben werden. In einer Ausgestaltung des erfindungsgemäßen Verfahrens kann jedoch die Gießform vor dem Einfüllen des Betons mit mit einem UV-beständigen Gelcoat beschichtet werden, welches später die Betonoberfläche bildet. Dies reduziert die Menge an UV-Stabilisatoren und vereinfacht den Mischprozeß des Harzes.

Anhand einer Zeichnung sollen Ausführungsarten der erfindungsgemäßen Schwelle näher erläutert werden. Es zeigen:
- Fig. 1: eine erfindungsgemäße Schwelle in Teildraufsicht;
- Fig. 2: eine vergrößerte Teilseitenansicht eines Blockes der Schwelle gemäß Fig. 1;
- Fig. 3: eine zweite Ausführungsform der Zwei-Block-Schwelle;
- Fig. 4: eine vergrößerte Seitenansicht eines Teiles der Schwelle gemäß Fig. 3;
- Fig. 5: eine Vor-Kopf-Ansicht einer Zwei-Block-Schwelle mit unterschiedlichen Zugankern;
- Fig. 6: eine Vor-Kopf-Ansicht einer Zwei-Block-Schwelle mit Bruchsicherung.

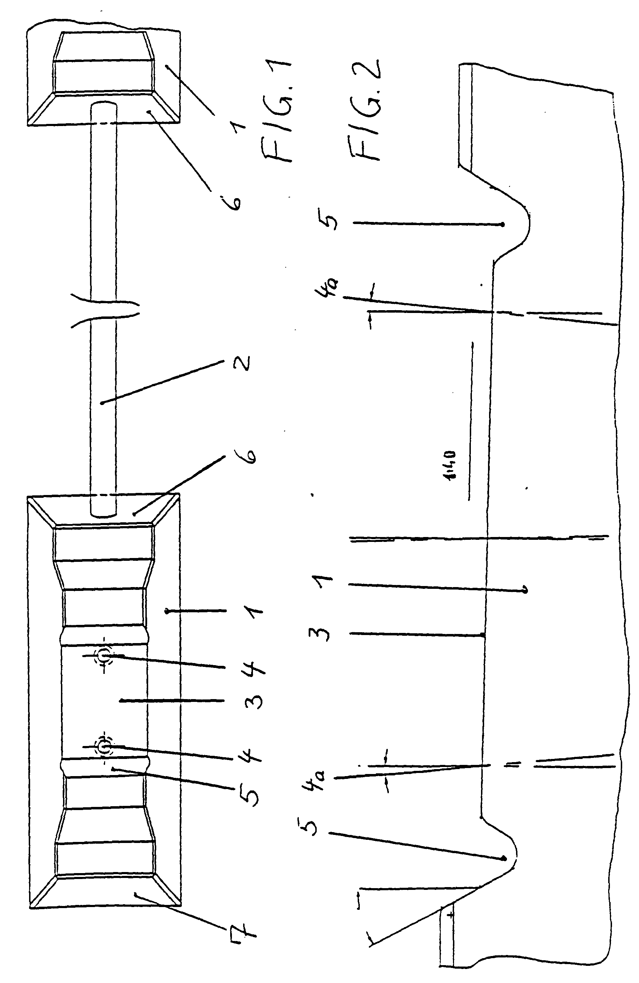

In Fig. 1 ist eine Zweiblockschwelle mit den Blöcken 1 dargestellt, die durch einen Zuganker 2 miteinander verbunden sind, wobei dieser Zuganker bei der Herstellung der Schwellen in die Blöcke 1 eingegossen ist. Im Bereich des späteren Schienenauflagers 3 sind seitlich des zu plazierenden Schienenfußes (nicht dargestellt) Dübel 4, hier ein Wellendübel mit äußerem Formschluß im Beton angeordnet, in die später Schienenbefestigungsmittel eingeschraubt werden können. Wegen der mangels Schwindung geringen Ringzugspannung im Dübel der fertigen Schwelle, können entsprechende Dübel aus preiswertem Material eingesetzt werden und die Dübelrißgefahr ist geringer als bei normal schwindendem Beton Die Schienenauflager 3 sind seitlich durch Sicken 5 begrenzt, deren Schultern der Anlage seitlich den Schienenfuß führender Schienenbefestigungsmittel dient. Wenn die Schwelle in Schotter gelegt wird, bieten die inneren Kopfflächen 6 und die äußeren Kopfflächen 7 der Zwei-Block-Schwelle einen genügend großen Widerstand gegen Querverschiebung der Schwelle im Schotter. Somit ist eine entsprechende Spursicherheit für die Schienen gegeben.

Die Fig.2 zeigt in Seitenansicht und vergrößert dargestellt den Bereich des Schienenauflagers 3 eines Blockes 1 der Zwei-Block-Schwelle. Es ist deutlich zu sehen, daß die Sicke 5 mit ihren Schultern exakt ausgeführt wird, um z.B. Winkelführungsplatten ein Widerlager zu bieten, die mit Hilfe von nicht dargestellten Schrauben in Achse 4 a des Dübels 4 (Fig. 1) in die Schwelle 1 geschraubt werden und einerseits die Winkelführungsplatte fixieren, andererseits den nicht dargestellten Schienenfuß in seiner Lage halten. Eine solche Sickenausbildung bedingt bei der Herstellung von Spannbetonschwellen eine sehr exakte Herstellung und eine extrem glatt aufbereitete, negativ geformte Platte, welche als Formteil in die Gießform einzusetzen ist. Bei Polymerbeton ist mit einer wesentlichen Schwindung nicht
zu rechnen, so daß dieser Hinterschnitt der Sicke 5 zu keiner Rißgefährdung bei einer aus Polymerbeton bestehenden Schwelle führen kann.

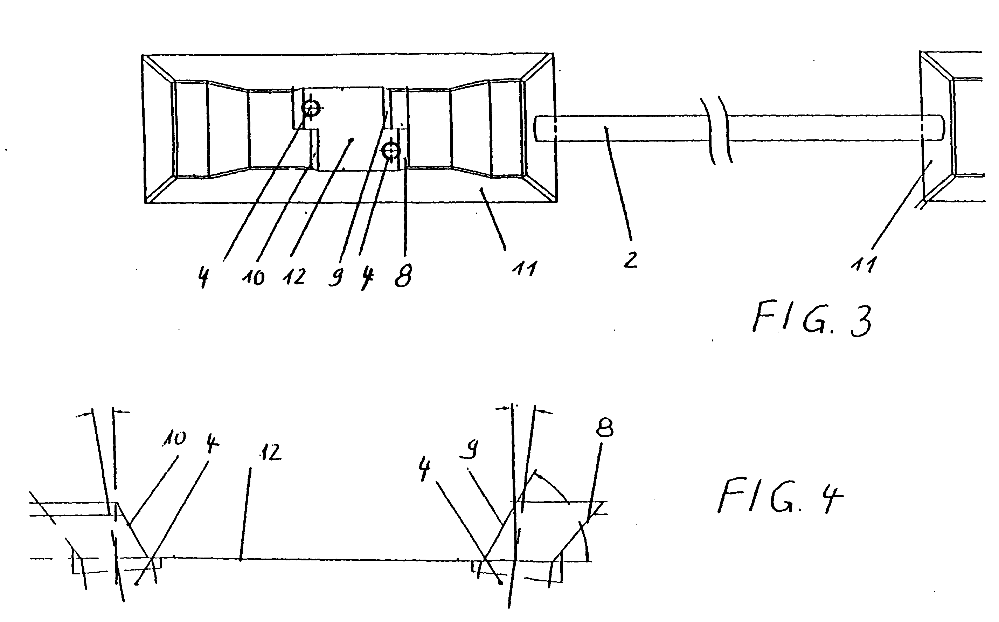

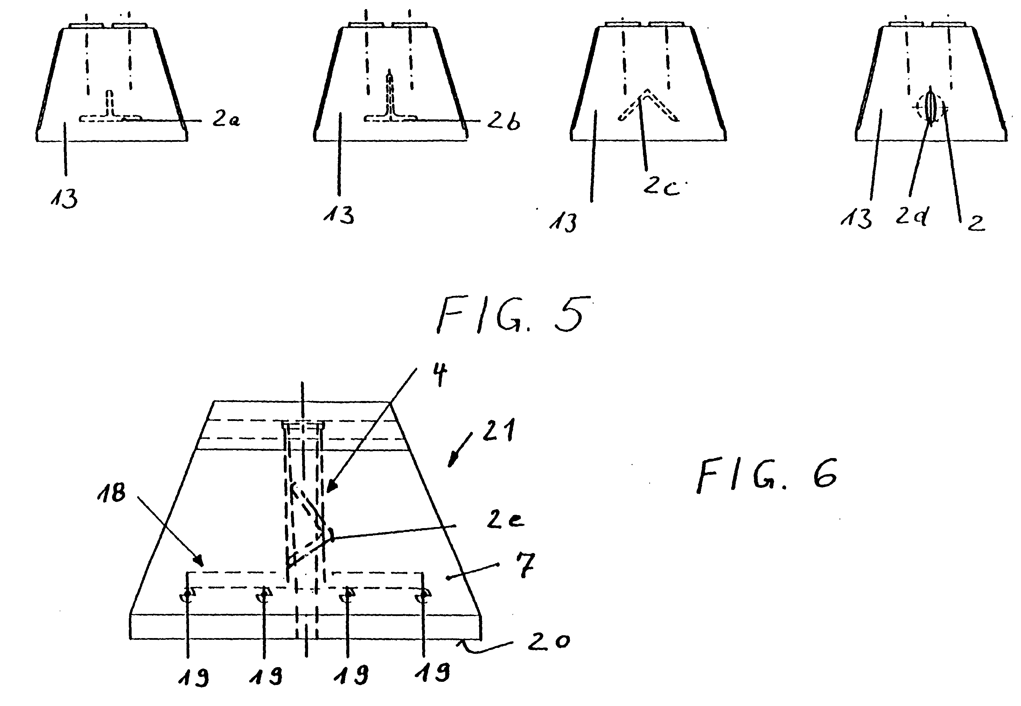

Die Fig. 3 zeigt eine zu Fig. 1 alternative Ausführung der Zwei-Block-Schwelle, die wiederum durch einen Zuganker 2 zwischen den beiden Blöcken 11 gekennzeichnet ist. Die Schienenauflagerung bzw. der Schienensitz 12 wird seitlich durch die Flanken 8, 9, 10 (Fig. 4) begrenzt und weist Dübel 4 für das Einbringen von Schienenbefestigungsmitteln auf.

Die Fig. 4 zeigt in vergrößerter Darstellung zu 3 eine seitliche Ansicht des Schienensitzes bzw. Schienenauflagers 12 und den dieses flankierende Dübel 4 in schematischer Darstellung. Es ist deutlich zu sehen, daß die Flanken 8, 9, 10 sehr steil ausgeführt sind. Eine derartige Flankensteilheit ist bei Blöcken aus Polymerbeton leicht zu realisieren, da, wie bereits dargestellt, eine Schwindung kaum festzustellen ist. Diese Flanken 8, 9, 10 dienen der Abstützung von Schienenbefestigungsmitteln, die in die Dübel 4 eingeschraubt werden.

Die Fig. 5 zeigt vier verschiedene Formen des Zugankers 2 in einer Vorkopfansicht der allgemein mit 13 bezeichneten Zwei-Block-Schwelle. 2 a stellt einen T-Stahl dar, 2 b einen derartigen T-Stahl mit vergrößertem Steg und entsprechend höherem Widerstandsmoment, 2 c einen Winkelstahl als Zuganker, der flach horizontal sowie als L-Profil 2 e (Fig. 6) flach vertikal zwischen den Blöcken angeordnet ist. Mit 2 d ist ein Ende eines Rundrohres analog den Fig. 1 und 3 dargestellt, welches oval gedrückt wurde, um einen besseren Formschluß durch Wechsel der Profilform innerhalb des Blockes aus Polymerbeton zu bieten. Dieses oval gedrückte Rohrende 2 d kann noch gespalten und auseinandergebogen werden, um den Formschluß zu erhöhen. Nicht dargestellt ist eine Bohrung im Rohrende von etwa 40 mm Durchmesser.

Fig. 6 schließlich zeigt eine Schwelle als Block 21 mit Kopffläche 7 bei der in einer Ebene zwischen ihrer Aufstandsfläche 20 und dem Zuganker 2 e ein Netz aus zugfesten Kohlefasern 13 mit Querverbindern 14 angeordnet ist. Das Netz, beziehungsweise die Fasern 13 in Längsrichtung halten den Polymerblock 21 zusammen, falls Belastungskräfte bei Entgleisung den Block spalten wollen. Während des Vergießens des Blockes können die Querverbinder 14 in der Gießform temporär an den Zuganker 2 e geklebt sein.

## Patentansprüche

1. Zwei-Block-Schwelle für schienengebundenen Verkehr, bei der zwei zur Auflagerung von elektrisch isolierten Schienen vorgesehene Blöcke (1, 11, 13) aus unbewehrtem Polymerbeton ein zwischen den Blöcken angeordnetes und als Zuganker ausgebildetes Stahlprofil (2) an dessen Enden umschließen, wobei der Polymerbeton im wesentlichen aus etwa 85 - 95 Gew% körnigem anorganischem Material, darunter mindestens 25 Gew% aus Kies mit einer Körnung größer 8 mm, und einem Rest von etwa 15 - 5 Gew.% des Polymerbetons aus duroplastischem Kunstharz als ausschließlichem Bindemittel hergestellt ist.

2. Zwei-Block-Schwelle für schienengebundenen Verkehr, bei der zwei zur Auflagerung von elektrisch isolierten Schienen vorgesehene Blöcke ( 1, 11, 13, 21) aus Polymerbeton ein zwischen den Blöcken angeordnetes und als Zuganker ausgebildetes Stahlprofil (2) an dessen Enden umschließen, innerhalb jeden Blockes in dessen Längsrichtung und quer zur Schiene den Zuganker überlappende Mittel (18, 19) zur vom Zuganker unabhängigen Übertragung von Zugkräften im Falle des Bruches des Blockes und der Polymerbeton im wesentlichen aus etwa 85 - 95 Gew% körnigem anorganischem Material, darunter mindestens 25 Gew% aus Kies mit einer Körnung größer 8 mm, und einem Rest von etwa 15 - 5 Gew.% des Polymerbetons aus duroplastischem Kunstharz als ausschließlichem Bindemittel hergestellt ist.

3. Schwelle nach Anspruch 1 oder 2, **dadurch gekennzeichnet, daß** der Anteil an Bindemitteln 8 - 12 Gew% beträgt.

4. Schwelle nach einem der vorhergehenden Ansprüche, **dadurch gekennzeichnet, daß** das Bindemittel ausgewählt wird aus der Gruppe, umfassend ungesättigte Polyesterharze, Epoxidharze, Vinylesterharze und Furanharze.

5. Schwelle nach einem der vorhergehenden Ansprüche, **dadurch gekennzeichnet, daß** das anorganische Material dem Polymerbeton in folgender Körnung und Konzentration zugesetzt wird:
| | |
|---|---|
| bis 0,3 mm | 5 - 14 Gew% |
| 0,3 - 8 mm | 25 - 55 Gew% |
| größer 8 mm | 25 - 55 Gew% |

6. Schwelle nach einem der vorhergehenden Ansprüche, **gekennzeichnet durch** die folgende Körnung des anorganischen Materials:
| | |
|---|---|
| bis 0,3 mm | 8 - 12 Gew% |
| 0,3 - 2 mm | 12 - 30 Gew% |
| 2 - 8 mm | 12 - 35 Gew% |
| 8 - 16 mm | 5 - 20 Gew% |
| größer 16 mm | 10 - 50 Gew% |

7. Schwelle nach einem der vorhergehenden Ansprüche, **gekennzeichnet durch** formschlüssig eingegossene Dübel (4), vorzugsweise aus mit dem Bindemittel kraftschlüssig bindbarem Kunststoff, zur Schienenbefestigung.

8. Schwelle nach einem der vorhergehenden Ansprüche, **gekennzeichnet durch** einen zur Oberseite und zur Unterseite der Schwelle hin offenen Dübel (4).

9. Schwelle nach einem der vorhergehenden Ansprüche, **dadurch gekennzeichnet, daß** das Stahlprofil als L-Profil oder Rundrohr (2) ausgebildet ist und sich in die Blöcke bis zu etwa einem Drittel der Länge der Blöcke (1, 11, 13, 21) erstreckt.

10. Schwelle nach einem der vorhergehenden Ansprüche, **dadurch gekennzeichnet, daß** das Stahlprofil (2) an seinen beiden Enden für einen Formschluß in dem zu vergießenden Polymerbeton umgeformt ist.

11. Verfahren zur Herstellung einer Zwei-Block-Schwelle, umfassend folgende Schritte:
- Herrichten von Einzel- oder Mehrfach-Gießformen durch Einlegen der einzugießenden Teile (2, 4, 18, 19) und der die Schienenauflager (3, 12) formenden Formteile,
- Zubereiten einer Charge Polymerbeton in einer Menge, die zur Füllung der vorbereiteten Gießformen ausreicht,
- dabei Mischen von organischem Mineralmehl, Kies, Füllstoffen in einer Menge von 85 - 95 Gew% und einem Zusatz an duroplastischem Reaktionsharz als Bindemittel in einer Menge von 5 - 15 Gew%,
- nach maximal drei Minuten Mischzeit, Vergießen der Charge in die Gießformen,
- Entschalen der Schwelle nach einer Aushärtezeit von maximal dreißig Minuten.

12. Verfahren nach Anspruch 11, **dadurch gekennzeichnet, daß** das Herrichten auch das Beschichten der Innenflächen der Gießform mit einem Gelcoat umfaßt.

13. Verfahren nach Anspruch 11 oder 12, **dadurch gekennzeichnet, daß** das Reaktionsharz zur Erwärmung der Polymerbetonmischung aus Komponenten mit einer größtmöglichen exothermischen Reaktion zusammengesetzt wird.

14. Verfahren nach einem der vorhergehenden Ansprüche, **dadurch gekennzeichnet, daß** nach dem Vergießen die Gießform zum Verdichten des Polymerbetons gerüttelt oder in Vibrationen versetzt wird.

15. Verfahren nach einem der vorhergehenden Ansprüche, **gekennzeichnet durch** ein Entschalen mittels an der Unterseite (20) der Blöcke aus Polymerbeton angesetzter Vakuum-Hebe-Vorrichtungen.

16. Verfahren nach einem der vorhergehenden Ansprüche, **dadurch gekennzeichnet, daß** die Schwelle nach dem Entschalen ausgelagert wird, vorzugsweise für 5 bis 8 Stunden bei einer Temperatur oberhalb Raumtemperatur, vorzugsweise bei 50 bis 80 °C.

## Claims

1. A twin-block sleeper for railborne traffic in which two blocks (1, 11, 13) made of unreinforced polymer concrete provided for supporting electrically insulated rails enclose a steel profile (2) at the ends thereof, which is located between said blocks and formed as a tension rod, wherein said polymer concrete is substantially made of approximately 85 - 95 percent in weight of granular inorganic material amongst at least 25 percent in weight of gravel with a graining of greater than 8 mm, and a rest of approximately 15 - 5 percent in weight of said polymer concrete of duroplastic resin as an exclusive binding agent.

2. A twin-block sleeper for railborne traffic in which two blocks (1, 11, 13, 21) made of polymer concrete provided for supporting electrically insulated rails enclose a steel profile (2) at the ends thereof, which is located between said blocks and formed as a tension rod, and block means (18, 19) are provided within each of said blocks in the longitudinal direction thereof, and transversely of said rail overlapping said tension rod for a load transmission of tensions forces in the case of breaking said block independently of said tension rod, and wherein said polymer concrete is substantially made of approximately 85 - 95 percent in weight of granular inorganic material amongst at least 25 percent in weight of gravel with a graining of greater than 8 mm, and a rest of approximately 15 - 5 percent in weight of said polymer concrete of duroplastic resin as an exclusive binding agent.

3. A sleeper according to claim 1 or claim 2 **characterized in that** the part of binding agents is 8 - 12 percent in weight.

4. A sleeper according to any one of the preceding claims **characterized in that** said binding agent is selected from the group comprising unsaturated polyester resins, epoxy resins, vinyl ester resins, and furan resins.

5. A sleeper according to any one of the preceding claims **characterized in that** said inorganic material will be added to said polymer concrete with the following graining and concentration:
| | |
|---|---|
| up to 0.3 mm | 5 - 14 percent in weight |
| 0.3 - 8 mm | 25 - 55 percent in weight |
| greater than 8 mm | 25 - 55 percent in weight |

6. A sleeper according to any one of the preceding claims **characterized by** the following graining of said inorganic material:
| | |
|---|---|
| up to 0.3 mm | 8 - 12 percent in weight |
| 0.3 - 2 mm | 12 - 30 percent in weight |
| 2 - 8 mm | 12 - 35 percent in weight |
| 8 - 16 mm | 5 - 20 percent in weight |
| greater than 16 mm | 10 - 50 percent in weight |

7. A sleeper according to any one of the preceding claims **characterized by** form-fit cast-in-place pegs (4) for rail mounting, which are preferably composed of plastic combinable with said binding agent in a nonpositive manner.

8. A sleeper according to any one of the preceding claims **characterized by** a peg (4) being open towards the upper side and the lower side of said sleeper.

9. A sleeper according to any one of the preceding claims **characterized in that** said steel profile is formed as an L-shaped profile or a tubular pipe (2), and extends into said blocks up to approximately one third of the length of said blocks (1, 11, 13, 21).

10. A sleeper according to any one of the preceding claims **characterized in that** said steel profile (2) is shaped round at the two ends thereof for a form closure within said polymer concrete to be grouted in.

11. A method for manufacturing a twin-block sleeper including the following steps of:
providing single or multiple casting moulds by inserting the parts (2, 4, 18, 19) to be poured in, and the preforms forming the rail supports (3, 12); preparing a batch of polymer concrete in a quantity which is sufficient for filling the prepared casting moulds;
thus mixing of organic mineral powder, gravel, filling materials comprising a quantity of 85 - 95 percent in weight, and an additive of duroplastic reaction resin as a binding agent comprising a quantity of 5- 15 percent in weight; after three minutes of mixing time at maximum grouting in said batch into said casting moulds;
releasing said sleeper after a cure time of thirty minutes at maximum.

12. A method according to claim 11 **characterized in that** said preparing also includes coating the inner surfaces of the casting mould with a gel coat.

13. A method according to claim 11 or claim 12 **characterized in that** said reaction resin for heating said polymer concrete mix is composed of components having a largest possible exothermic reaction.

14. A method according to any one of the preceding claims **characterized in that** after grouting in said casting mould will be shaked or vibrated for compressing said polymer concrete.

15. A method according to any one of the preceding claims **characterized by** releasing by means of vacuum type lifting devices mounted on the bottom side (20) of said blocks of polymer concrete.

16. A method according to any one of the preceding claims **characterized in that** said sleeper after being released will be aged preferably for 5 to 8 hours at a temperature above the ambient temperature, preferably at 50°C to 80°C.

## Revendications

1. Traverse mixte pour le trafic par rail dans laquelle deux blochets (1, 11, 13) en béton au polymère non armé destinés à recevoir des rails isolés électriquement entourent les extrémités d'un profilé en acier (2) disposé entre les blochets et réalisé comme tirant, le béton au polymère étant constitué essentiellement d'environ 85 à 95 % en poids d'un matériau inorganique granuleux, dont au moins 25 % en poids de grave d'une granulométrie supérieure à 8 mm, et d'un reste d'environ 15 à 5 % en poids du béton au polymère de résine de synthèse thermodurcissable faisant fonction de seul et unique liant.

2. Traverse mixte pour le trafic par rail dans laquelle deux blochets (1, 11, 13, 21) en béton au polymère destinés à recevoir des rails isolés électriquement entourent les extrémités d'un profilé en acier (2) disposé entre les blochets et réalisé comme tirant, des moyens (18, 19) chevauchant sur le tirant et destinés à transmettre des efforts de traction indépendamment du tirant en cas de cassure du blochet étant prévus à l'intérieur de chaque blochet dans sa direction longitudinale et en travers du rail et le béton au polymère étant constitué essentiellement d'environ 85 à 95 % en poids d'un matériau inorganique granuleux, dont au moins 25 % en poids de grave d'une granulométrie supérieure à 8 mm, et d'un reste d'environ 15 à 5 % en poids du béton au polymère de résine de synthèse thermodurcissable faisant fonction de seul et unique liant.

3. Traverse selon la revendication 1 ou 2, **caractérisée en ce que** le pourcentage de liant est de 8 à 12 % en poids.

4. Traverse selon l'une quelconque des revendications précédentes, **caractérisée en ce que** le liant est sélectionné du groupe comprenant des résines polyester, des résines époxy, des résines estervinyliques et des résines furanniques insaturées.

5. Traverse selon l'une quelconque des revendications précédentes, **caractérisée en ce que** le matériau inorganique ajouté au béton au polymère a la composition granulométrique et la concentration suivantes:
| | |
|---|---|
| jusqu'à 0,3 mm | 5 - 14 % en poids |
| de 0,3 à 8 mm | 25 - 55 % en poids |
| supérieur à 8 mm | 25 - 55 % en poids |

6. Traverse selon l'une quelconque des revendications précédentes, **caractérisée par** la granulométrie suivante du matériau inorganique:
| | |
|---|---|
| jusqu'à 0,3 mm | 8 - 12 % en poids |
| de 0,3 à 2 mm | 12 - 30 % en poids |
| de 2 à 8 mm | 12 - 35 % en poids |
| de 8 à 16 mm | 5 - 20 % en poids |
| supérieur à 16 mm | 10 - 50 % en poids |

7. Traverse selon l'une quelconque des revendications précédentes, **caractérisée par** des goupilles (4) qui sont coulées de manière positive et faites de préférence en matière synthétique liable par adhérence au liant et qui sont destinées à fixer les rails.

8. Traverse selon l'une quelconque des revendications précédentes, **caractérisée par** une goupille (4) qui s'ouvre sur le côté supérieur et sur le côté inférieur de la traverse.

9. Traverse selon l'une quelconque des revendications précédentes, **caractérisée en ce que** le profilé en acier est réalisé sous forme de profilé en L ou de tube à section ronde et s'étend dans les blochets jusqu'à environ un tiers de la longueur des blochets (1, 11, 13, 21).

10. Traverse selon l'une quelconque des revendications précédentes, **caractérisée en ce que** le profilé en acier (2) est déformé à ses deux extrémités dans le béton au polymère à couler afin d'obtenir un engagement positif.

11. Procédé de fabrication d'une traverse mixte comprenant les étapes suivantes:
- préparation de moules à empreinte unique ou à empreintes multiples consistant à y placer les pièces à couler (2, 4, 18, 19) et les pièces moulées formant les assiettes de rails (3, 12),
- préparation d'une charge de béton au polymère dans une quantité suffisant à remplir les moules préparés,
- en mélangeant de la farine de minéraux organiques, du grave, des matières de remplissage dans une proportion de 85 à 95 % en poids et en ajoutant audit mélange 5 à 15 % en poids de résine de réaction thermodurcissable faisant fonction de liant,
- coulage de la charge dans les moules au bout d'une durée de malaxage maximale de trois minutes,
- démoulage de la traverse après un temps de durcissement de trente minutes.

12. Procédé selon la revendication 11, **caractérisé en ce que** la préparation des moules consiste également à revêtir les parois internes du moule d'un enduit sous forme de gel.

13. Procédé selon la revendication 11 ou 12, **caractérisé en ce que**, pour chauffer le mélange de béton au polymère, la résine de réaction est composée de constituants ayant la plus grande réaction exothermique possible.

14. Procédé selon l'une des revendications précédentes **caractérisé en ce que**, après coulage, le moule est secoué ou soumis à des vibrations afin de densifier le béton au polymère.

15. Procédé selon l'une des revendications précédentes **caractérisé par** un démoulage effectué au moyen de dispositifs élévateurs à vide placés sur le côté inférieur (20) des blochets en béton au polymère.

16. Procédé selon l'une des revendications précédentes **caractérisé en ce que** la traverse, une fois démoulée, est durcie par précipitation, de préférence pendant 5 à 8 heures à une température supérieure à la température ambiante, de préférence à une température de 50 à 80° C.
